# EUROPÄISCHE PATENTANMELDUNG

(11) **EP 1 072 862 A1**
(43) Veröffentlichungstag der Anmeldung: **31.01.2001**
(21) Anmeldenummer: 00112939.4
(22) Anmeldetag: 20.06.2000
(51) Int. Cl.: G01C 21/26

(54) **Navigationsverfahren und Navigationsgerät**

(30) Priorität: 29.07.1999 DE 19935645
(71) Anmelder: ROBERT BOSCH GMBH, 70442 Stuttgart (DE)
(72) Erfinder: Rychlak, Stefan, 31241 Ilsede (DE)

(57) **Zusammenfassung**

Vorgeschlagen werden ein Navigationsverfahren zur Leitung eines Fahrzeugführers mittels Fahranweisungen von einem Start- oder aktuellen Standort zu einem Zwischenzielort entlang einer berechneten Fahrtroute, dadurch gekennzeichnet, daß der Zwischenzielort ein weiterer Startort für eine Weiterfahrt mittels eines alternativen Verkehrsmittels zu einem Zielort ist, und daß zusätzlich zu den Fahranweisungen in Abhängigkeit bekannter Abfahrtszeiten und Fahrtziele des alternativen Verkehrsmittels Informationen erzeugt werden, die dem Fahrzeugführer zur Kenntnis gebracht und/oder in die Routenberechnung einbezogen werden.

## Beschreibung

### Stand der Technik

Die Erfindung geht von einem Navigationsverfahren zur Leitung eines Fahrzeugführers von einem Start- oder aktuellen Standort zu einem Zwischenzielort sowie einem Navigationsgerät nach der Gattung der unabhängigen Patentansprüche aus.

Es sind Navigationsverfahren und Navigationsgeräte, insbesondere für Kraftfahrzeuge, bekannt, die nach Eingabe eines Navigationsziels eine Fahrtroute von einem Startort oder einem aktuellen Fahrzeugstandort zu dem vorgegebenen Navigationsziel berechnen und den Fahrzeugführer während der Fahrt in Abhängigkeit eines jeweils aktuellen Fahrzeugstandorts mittels akustischer und/oder optischer Fahranweisungen entlang der berechneten Fahrtroute zum Navigationsziel führen.

Möchte nun beispielsweise ein Fahrzeugführer eine Reise mittels eines alternativen Verkehrsmittels, insbesondere beispielsweise mit Bus, Bahn oder Flugzeug, antreten und den Abfahrtsort des alternativen Verkehrsmittels mit dem Kraftfahrzeug erreichen, ist es für eine Zielführung erforderlich, den Abfahrtsort als Zielort in das Navigationsgerät einzugeben.

### Vorteile der Erfindung

Das erfindungsgemäße Navigationsverfahren mit den Merkmalen des unabhängigen Verfahrensanspruchs, das in Abhängigkeit bekannter Abfahrtszeiten und Fahrtziele eines alternativen Verkehrsmittels Informationen erzeugt, die dem Fahrzeugführer zur Kenntnis gebracht und/oder in eine Routenberechnung vom Start- oder aktuellen Standort zum Abfahrtsort des alternativen Verkehrsmittels einbezogen werden, sowie das erfindungsgemäße Navigationsgerät mit den Merkmalen des unabhängigen Sachanspruchs haben den Vorteil, daß dem Fahrzeugführer frühzeitig, nämlich schon während der Anfahrt eines Abfahrtsorts eines alternativen Verkehrsmittels, Hinweise auf das nächsterreichbare oder schnellste alternative Verkehrsmittel zu einem bestimmten Reiseziel vermittelt werden. Alternativ oder ergänzend können die erzeugten Informationen im Sinne einer Optimierung der gesamten Reise vom Start- zum Zielort, beispielsweise hinsichtlich der Reisezeit, schon bei der Routenberechnung, also beispielsweise bei der Auswahl eines Abfahrtsorts für das alternative Verkehrsmittel, automatisch berücksichtigt werden. Schließlich ist es von Vorteil, daß eine Reise unter Einbeziehung alternativer Verkehrsmittel als ganze, beispielsweise im Hinblick auf eine minimale Reisezeit, optimiert werden kann.

Von besonderem Vorteil ist es dabei, wenn gemäß einer Ausbildung der Erfindung der Fahrzeugführer frühzeitig davon Kenntnis erlangt, ob, und gegebenenfalls mit welcher Zeitreserve bis zur Abfahrt des alternativen Verkehrsmittels dessen Abfahrtsort voraussichtlich erreicht wird. Dies ermöglicht dem Fahrzeugführer, beispielsweise bei großer zeitlicher Reserve, das Einplanen von Zwischenstopps auf dem Weg zum Abfahrtsort, beispielsweise zur Erledigung von Amtsgängen, Einkäufen oder ähnlichem. Besonders vorteilhaft ist es dabei, wenn die Zeitreserve von dem voraussichtlichen Eintreffen am Abfahrtsort bis zur tatsächlichen Abfahrt des alternativen Verkehrsmittels angegeben wird. Dies ermöglicht eine leichtere Abschätzung der beispielsweise für Umwege oder Fahrtunterbrechungen auf dem Wege zum Abfahrtsort verfügbaren Zeitreserve.

Weiter ist es von Vorteil, wenn die dem Fahrzeugführer zur Verfügung stehende Zeitreserve vom voraussichtlichen Eintreffen am Abfahrtsort bis zur Abfahrt des alternativen Verkehrsmittels auch in Abhängigkeit tatsächlich herrschender Verkehrsverhältnisse, insbesondere unter Berücksichtigung beispielsweise von Verkehrsstauungen, ermittelt wird. Informationen aber die tatsächlich herrschenden Verkehrsverhältnisse sind dabei beispielsweise über eine Funkverbindung an das fahrzeugseitige Navigationsgerät übermittelbar.

Ein weiterer Vorteil ist darin zu sehen, daß gemäß einer vorteilhaften Ausführungsform der Erfindung bei Unterschreiten einer bestimmten vorgegebenen Zeitreserve von beispielsweise 10 Minuten bis zur Abfahrt des alternativen Verkehrsmittels nicht diese Zeitreserve, sondern die Zeitreserve bis zur Abfahrt des dann nächstfolgenden alternativen Verkehrsmittels angegeben wird. Damit wird verhindert, daß der Fahrzeugführer angesichts einer geringen Zeitreserve zu einem aggressiveren Fahrverhalten übergeht, um das alternative Verkehrsmittel doch noch rechtzeitig zu erreichen. Diese Ausführungsform trägt somit zur Verkehrssicherheit bei.

Ein weitere vorteilhafte Ausführungsform der Erfindung besteht darin, daß die aufgrund der Abfahrtzeiten und Abfahrtziele der alternativen Verkehrsmittel erzeugten Informationen derart in die Routenberechriung einbezogen werden, daß die Fahrtroute zu einem solchen Abfahrtsort berechnet wird, von dem aus das alternative Verkehrsmittel, das am schnellsten zum Zielort gelangt, abfährt. Dies ermöglicht die Optimierung im Sinne einer Minimierung der Gesamtreisezeit vom Start- oder aktuellen Standort zum Reiseziel. Insbesondere ist es auf diese Weise unter bestimmten Umständen auch möglich, ein verpaßtes oder mit unzureichender Zeitreserve an einem bestimmten Abfahrtort erreichbares alternatives Verkehrsmittel an einem anderen Abfahrtsort, der auf der Strecke des alternativen Verkehrsmittels liegt, mit genügender Zeitreserve zu erreichen.

Von besonderem Vorteil ist es weiterhin, wenn gemäß einer vorteilhaften Ausführungsform der Erfindung Abfahrtszeiten und Fahrtziele von alternativen Verkehrsmitteln nicht nur fest gespeichert, sondern auch in aktualisierter Form an das fahrzeugseitige Navigationsgerät übertragbar sind. Dies ermöglicht beispielsweise eine Reaktion der Routenberechnung auf Verspätungen oder Ausfälle eines alternativen Verkehrsmittels. So kann beispielsweise ein als verspätet angekündigter Zug noch mit genügender Zeitreserve erreicht werden, der im Falle einer planmäßigen Abfahrt nicht mehr zu erreichen gewesen wäre.

### Zeichnungen

Ausführungsbeispiele der Erfindung sind in der Figur dargestellt und werden nachfolgend näher erläutert.

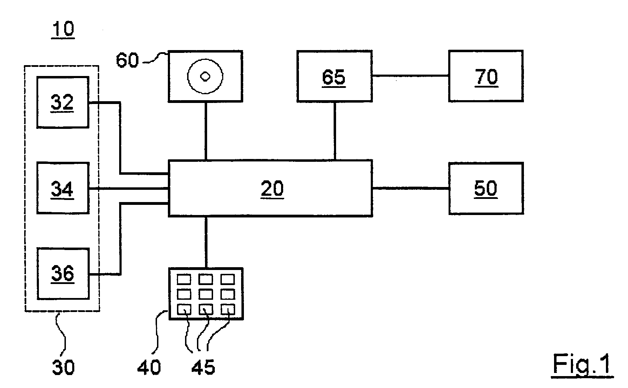

Figur 1 zeigt ein Blockschaltbild des erfindungswesentlichen Teils eines erfindungsgemäßen Navigationsgeräts.

### Beschreibung der Ausführungsbeispiele

Das in Figur 1 schematisch dargestellte Navigationsgerät 10 umfaßt eine Steuerung 20, die ihrerseits wiederum den eigentlichen Navigationsrechner des Geräts beinhaltet. Die Steuerung ist vorteilhafterweise in Form eines Betriebsprogramms, das durch einen Mikroprozessor abgearbeitet wird, realisiert.

An die Steuerung 20 sind Mittel 30 zur Bestimmung des aktuellen Standorts des Fahrzeugs, in dem das Navigationsgerät 10 betrieben wird, sowie dessen Bewegungszustand angeschlossen. Im einzelnen sind dies ein Geschwindigkeitsmesser 32, der beispielsweise aus Impulsen von Radsensoren eines ABS (Antiblockiersystem) pro Zeiteinheit und einem bekannten Radumfang ein die aktuelle Geschwindigkeit des Fahrzeugs anzeigendes Signal abgibt. Dieses kann, beispielsweise durch Integration über die Zeit, oder durch Verknüpfen der absoluten Anzahl der Impulse der Radsensoren mit dem bekannten Radumfang auch zur Bestimmung einer zurückgelegten Wegstrecke herangezogen werden. Weiter handelt es sich dabei um einen Drehratensensor 34, wobei aus einer Drehratenänderung eine Änderung der Ausrichtung des Fahrzeugs bezogen auf eine bestimmte Himmelsrichtung oder durch Integration der Drehratenänderung über die Zeit eine jeweils aktuelle Ausrichtung des Fahrzeugs abgeleitet wird. Schließlich handelt es sich dabei um einen Empfänger 36 für zur Positionsbestimmung vorgesehene Funksignale, insbesondere Satellitensignale des GPS (Global Positioning System), die eine zusätzliche Positionsbestimmung ermöglichen.

Weiter ist an die Steuerung 20 eine Eingabeeinheit 40 mit Bedienelementen 45 angeschlossen, die der Bedienung des Navigationsgeräts 10, unter anderem der Eingabe eines Navigations-Zielorts und/oder eines Zwischenziels dient. Die Eingabe des Navigationsziels erfolgt dabei beispielsweise durch buchstabenweise Eingabe des Ortsnamens des Navigationsziels und/oder durch Auswählen des Navigationsziels aus einer Liste.

Weiterhin ist an die Steuerung 20 eine Ausgabeeinheit 50 zur optischen und/oder akustischen Ausgabe von Fahrtanweisungen, etwa in der Form 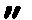 an der nächsten Kreuzung rechts abbiegen!", angeschlossen. Diese dient im vorliegenden Fall auch der Ausgabe zusätzlicher Informationen, insbesondere beispielsweise der Anzeige einer Zeitreserve vom voraussichtlichen Erreichen des Abfahrtsorts eines alternativen Verkehrsmittels bis zu dessen tatsächlicher Abfahrt.

Zur Berechnung einer Fahrtroute von einem Start- oder aktuellen Fahrzeugstandort zu einem Ziel- oder Zwischenzielort greift das Navigationagerät auf Informationen einer in digitaler Form vorliegenden Karte zu. Dazu umfaßt das Navigationsgerät 20 einen mit der Steuerung 20 verbundenen ersten Speicher 60, in dem die Karte mit Verkehrswegeinformationen, insbesondere mit mittels des Kraftfahrzeugs befahrbaren Straßen, gespeichert ist. Der Speicher ist beispielsweise in Form eines CD-ROM-Laufwerks mit darin eingelegter CD-ROM als Datenträger realisiert.

Weiterhin ist ein zweiter, mit der Steuerung 20 verbundener Speicher 65 vorgesehen, in dem Abfahrtszeiten und Fahrtziele alternativer Verkehrsmittel abgespeichert sind. Insbesondere enthält der zweite Speicher 65 beispielsweise die Daten des Kursbuches der Bahn, nämlich die Abfahrtszeiten und Fahrtziele sämtlicher Züge von sämtlichen Bahnhöfen, sowie weiterhin die Flugpläne sämtlicher Flughäfen, gegebenenfalls zusätzlich Bus- und Regionalbahnfahrpläne und ähnliches. Dieser zweite Speicher 65 ist vorteilhaft als wiederbeschreibbarer Speicher ausgeführt und zur Aktualisierung seines Inhalts mit einem Funkempfänger bzw. einem Funkgerät 70 verbunden, so daß beispielsweise Daten über Fahrplanänderungen oder Verspätungen und Ausfälle einzelner alternativer Verkehrsmittel über die Funkschnittstelle in den zweiten Speicher übernommen werden können.

Das erfindungsgemäße Navigationsverfahren funktioniert wie folgt.

Über die Bedieneinheit 40 wird mittels deren Bedienelementen 45 ein Reiseziel eingegeben wird, das mittels eines alternativen Verkehrsmittels, also nicht mit dem Pkw, sondern beispielsweise mit Bus, Bahn oder Flugzeug erreicht werden soll, wobei der Abfahrtsort des alternativen Verkehrsmittels mit dem Pkw angesteuert werden soll.

Nach Eingabe des Reiseziels ermittelt der als Teil der Steuerung 20 realisierte Navigationsrechner aus den Signalen der Positionsbestimmungsmittel 30, also des Geschwindigkeitsmessers 32, des Drehratensensors 34 und des GPS-Empfängers 36, den aktuellen Fahrzeugstandort, wobei die aus den Sensoren 32 bis 36 bestimmte Position vorteilhafterweise zur Fehlerkorrektur im Sinne einer Plausibilitätsprüfung mit den Daten der gespeicherten Karte abgeglichen wird.

Anschließend ermittelt der Navigationsrechner eine Fahrtroute vom aktuellen Fahrzeugstandort zum Abfahrtsort des alternativen Verkehrsmittels, wobei im als vorliegend angenommenen Fall, daß für das alternative Verkehrsmittel keinerlei Vorgaben gemacht wurden, automatisch die schnellste Verbindung zum Reiseziel gewählt wird. Das bedeutet, daß der Navigationsrechner unter Rückgriff auf die Informationen des zweiten Speichers 65, also beispielsweise Flug-, Bahn- und Busfahrpläne, automatisch das unter der Randbedingung einer schnellsten Verbindung bzw. minimalen Reisezeit günstigste Verkehrsmittel, sowie dessen Abfahrtsort ermittelt und eine Route vom aktuellen Standort zu diesem Abfahrtsort berechnet. Möchte beispielsweise der Fahrzeugführer auf dem schnellstmöglichen Weg aus der näheren Umgebung der Stadt Stuttgart unter Benutzung eines alternativen Verkehrsmittels nach Frankfurt/Main reisen, so bestimmt das Navigationsgerät ausgehend von den im zweiten Speicher 65 gespeicherten Bus- und Bahnfahrplänen einen nahegelegenen Bahnhof eines Nahverkehrszuges oder die Haltestelle einer Buslinie, von dem/der der Fahrzeugführer mittels Nahverkehrszug oder Bus nach Stuttgart Hauptbahnhof gelangt, von wo aus er nach Umsteigen in einen schnellen Fernverkehrszug nach Frankfurt/Main gelangt.

Während des eigentlichen Zielführungsvorgangs, also während der Führung des Fahrzeugführers mittels Fahrtanweisungen entlang der berechneten Route, wird dem Fahrzeugführer stets oder in regelmäßigen zeitlichen Abständen die verbleibende Zeitreserve vom voraussichtlichen Eintreffen des Fahrzeugs am Abfahrtsort bis zur Abfahrt des alternativen Verkehrsmittels zur Kenntnis gebracht. Die Zeitreserve wird dabei aus der Differenz zwischen aktueller Uhrzeit und planmäßiger oder tatsächlicher Abfahrtszeit des alternativen Verkehrsmittels sowie aus zusammen mit den Kartendaten abgespeicherten Informationen über auf den zu befahrenden Streckenabschnitten erzielbare Fahrgeschwindigkeiten berechnet.

Eine besonders vorteilhafte Ausführungsform der Erfindung sieht hier vor, daß für den Fall, daß die berechnete Zeitreserve eine vorgegebene Schranke von beispielsweise 10 Minuten vom voraussichtlichen Eintreffen des Kraftfahrzeugs am Abfahrtsort des alternativen Verkehrsmittels bis zu dessen tatsächlicher Abfahrt, beispielsweise infolge einer nicht bekannten Verkehrsstauung auf dem Weg zum Zwischenziel, also dem Abfahrtsort des alternativen Verkehrsmittels, oder einer nicht eingeplanten Fahrtunterbrechung, unterschreitet, diese Tatsache dem Fahrer zur Kenntnis gebracht und eine neue Routenberechnung in der oben beschriebenen Weise veranlaßt wird. Dabei kann auch ein anderes alternatives Verkehrsmittel, beispielsweise ein anderer Zug oder ein anderer Abfahrtsort, also ein anderes Zwischenziel, als das ursprünglich angesteuerte, ausgewählt werden. War beispielsweise ursprünglich vorgesehen, daß der Fahrzeugführer auf der Reise vom Umland im Norden Stuttgarts nach Frankfurt/Main einen nahegelegenen S-Bahnhof ansteuert um von dort nach Stuttgart/Hauptbahnhof zu gelangen, und ist absehbar, daß der S-Bahnhof mit nicht ausreichender Zeitreserve vor Abfahrt der S-Bahn erreicht wird, so wird eine neue Routenberechnung veranlaßt. Diese kommt beispielsweise zu dem Ergebnis, daß statt des S-Bahnhofs der Fernverkehrsbahnhof Vaihingen/Enz angesteuert werden soll, der ohnehin durch den ab Stuttgart/Hauptbahnhof fahrenden Interregio-Zug passiert wird, so daß der ursprünglich eingeplante schnellste Zug nach Frankfurt/Main ab Stuttgart/Hauptbahnhof nun noch im Bahnhof Vaihingen/Enz erreicht werden kann. Hierbei wird in Kauf genommen, daß die mit dem Kraftfahrzeug zurückzulegende Wegstrecke im Vergleich zum ersten Routenvorschlag deutlich länger ist.

Eine weitere besonders vorteilhafte Ausführungsform der Erfindung sieht vor, daß die Routenberechnung nicht von einem statischen, sondern einem dynamischen, also ständig aktualisierten Datenbestand ausgeht. Dazu verfügt das Navigationsgerät über einen Empfänger oder ein Funkgerät, das mit dem zweiten Speicher verbunden ist. Über die Funkschnittstelle sind die Daten des zweiten Speichers 65, also beispielsweise die Fahrpläne, durch beispielsweise von einem Dienstanbieter zur Verfügung gestellte Informationen aktualisierbar. So können beispielsweise angekündigte Verspätungen oder vollständige Ausfälle eines alternativen Verkehrsmittels, wie Zugverspätungen oder Streichung von Flügen infolge ungünstiger Witterungsverhältnisse, in die Routenplanung einbezogen werden.

Darüber hinaus kann es aber auch vorgesehen sein, daß vor einer Routenberechnung über das Funkgerät 70, beispielsweise ein GSM-Mobilfunktelefon eine Verbindung zu einem Diensteanbieter hergestellt wird, von dem beispielsweise eine bestimmte interessierende Region, wie beispielsweise die Stuttgarter Umgebung, betreffende Fahrpläne und gegebenenfalls Zusatzinformationen abrufbar sind, die dann für die folgende Routenberechnung im zweiten Speicher 65 abgelegt werden. Dies hat den Vorteil, daß zum einen stets aktuelle Informationen zur Verfügung stehen und zum anderen der zweite Speicher 65 nur eine begrenzte Kapazität aufzuweisen braucht.

Ebenso ist es auch möglich, statt der statischen Karteninformationen des ersten Speichers 60 aktualisierte Informationen, beispielsweise über Verkehrsstauungen auf bestimmten Streckenabschnitten, geänderte Geschwindigkeitsbeschränkungen beispielsweise in Folge von Baustellen oder auch Streckensperrungen bei der Routenplanung zu berücksichtigen. Dazu können beispielsweise als Teil des Radio Daten Systems (RDS) innerhalb eines sogenannten traffic message channel (TMC) über eine mit einem Rundfunkempfänger empfangene Rundfunkfrequenz übertragene Verkehrsinformationen ausgewertet werden.

Weiterhin kann vorgesehen sein, daß für die Routenberechnung weitere Parameter vorgebbar sind, wie beispielsweise
- Vorgabe, Ausschluß oder Beschränkungen eines bestimmten alternativen Verkehrsmittels, wie beispielsweise kein Bus, kein Nahverkehrszug, kein Flugzeug, also letzten Endes nur Fernverkehrszüge, möglichst kurze Anfahrt zum Abfahrtsort des alternativen Verkehrsmittels,
- Vorgabe bestimmter Details des alternativen Verkehrsmittels, wie beispielsweise eine möglichst hochwertige Zugverbindung, also möglichst ICE, Nachtreisezug mit Schlafwagen,
- Vorgabe eines Optimierungskriteriums für die gesamte Reise, wie kürzeste Reisezeit, möglichst wenig umsteigen, möglichst kurze Zwischenaufenthalte (beispielsweise beim Umsteigen an Bahnhöfen),
- Vorgaben betreffend die Infrastruktur des Abfahrtsorts, wie beispielsweise ausreichende Anzahl von Parkplätzen am Abfahrtsort, Ausstattung mit bestimmten Einkaufsmöglichkeiten oder Dienstleistungen,
- Vorgabe einer Untergrenze für eine Zeitreserve vom Eintreffen am Abfahrtsort bis zur Abfahrt des alternativen Verkehrsmittels, die beispielsweise für das ordnungsgemäße Abstellen des Kraftfahrzeugs, eventuell kleine Einkäufe und das Erreichen des alternativen Verkehrsmittels benötigt wird.

Zur Berücksichtigung dieser Parameter müssen selbstverständlich die gespeicherte Karte im ersten Speicher 60 und/oder die Informationen im zweiten Speicher 65 entsprechende Informationen enthalten.

Alternativ zur automatischen Bestimmung des geeignetsten alternativen Verkehrsmittels und/oder dessen günstigstem Abfahrtsort als Zwischenziel kann es auch vorgesehen sein, daß das alternative Verkehrsmittel oder dessen Abfahrtsort durch den Fahrzeugführer fest vorgebbar sind. In diesem Falle berechnet der Navigationsrechner die Fahrtroute vom aktuellen Fahrzeugstandort zu dem vorgegebenen Zwischenziel und zeigt die verfügbare Zeitreserve, entweder vom aktuellen Fahrzeugstandort, oder vom voraussichtlichen Eintreffen am Zwischenziel bis zur Abfahrt des alternativen Verkehrsmittels an. Zur Erhöhung der Verkehrssicherheit kann es dabei vorgesehen sein, daß bei Unterschreiten einer bestimmten kleinsten Zeitreserve, die beispielsweise für das ordnungsgemäße Abstellen des Pkw und das Erreichen des alternativen Verkehrsmittels benötigt wird, nicht die tatsächliche Zeitreserve, sondern die Zeitreserve bis zur Abfahrt des darauffolgenden alternativen Verkehrsmittels, also beispielsweise bis zur Abfahrt des folgenden Zuges mit gleichem Ziel, angezeigt wird.

## Patentansprüche

1. Navigationsverfahren zur Leitung eines Fahrzeugführers mittels Fahranweisungen von einem Start- oder aktuellen Standort zu einem Zwischenzielort entlang einer berechneten Fahrtroute,
dadurch gekennzeichnet,
daß der Zwischenzielort ein weiterer Startort für eine Weiterfahrt mittels eines alternativen Verkehrsmittels zu einem Zielort ist,
und daß zusätzlich zu den Fahranweisungen in Abhängigkeit bekannter Abfahrtszeiten und Fahrtziele des alternativen Verkehrsmittels Informationen erzeugt werden, die dem Fahrzeugführer zur Kenntnis gebracht und/oder in die Routenberechnung einbezogen werden.

2. Navigationsverfahren nach Anspruch 1, dadurch gekennzeichnet, daß die Informationen in Abhängigkeit eines durch den Fahrzeugführer vorgegebenen Zielorts erzeugt werden.

3. Navigationsverfahren nach einer der vorstehenden Ansprüche, dadurch gekennzeichnet, daß die erzeugten Informationen die bis zur Abfahrt des alternativen Verkehrsmittels verfügbare Zeit, wahlweise entweder vom aktuellen Fahrzeugstandort oder vom voraussichtlichen Eintreffen des Fahrzeugführers am Zwischenzielort gerechnet, sind.

4. Navigationsverfahren nach Anspruch 3, dadurch gekennzeichnet, daß die erzeugten Informationen dann, wenn die verfügbare Zeit eine vorgegebene Schranke unterschreitet, die verfügbare Zeit bis zur Abfahrt des nächstmöglichen darauffolgenden alternativen Verkehrsmittels sind.

5. Navigationsverfahren nach einem der vorstehenden Ansprüche, dadurch gekennzeichnet, daß die erzeugten Informationen derart in die Routenberechnung einbezogen werden, daß die Fahrtroute zu einem solchen Zwischenzielort berechnet wird, von dem aus das alternative Verkehrsmittel, das am schnellsten zum Zielort gelangt, abfährt.

6. Navigationsverfahren nach einem der vorstehenden Ansprüche, dadurch gekennzeichnet, daß die erzeugten Informationen derart in die Routenberechnung einbezogen werden, daß die Fahrtroute zu einem solchen Zwischenzielort berechnet wird, von dem aus das alternative Verkehrsmittel, das am schnellsten zum Zielort gelangt, nicht vor Ablauf einer vorgegebenen Zeit nach der voraussichtlichen Ankunft des Fahrzeugführers am Zwischenzielort abfährt.

7. Navigationsverfahren nach einem der vorstehenden Ansprüche, dadurch gekennzeichnet, daß Abfahrtszeiten und Fahrtziele der alternativen Verkehrsmittel aus einem Speicher ausgelesen werden.

8. Navigationsverfahren nach einem der Ansprüche 1 bis 6, dadurch gekennzeichnet, daß Abfahrtszeiten und Fahrtziele der alternativen Verkehrsmittel über eine Funkverbindung empfangen werden.

9. Navigationsgerät zur Führung eines Fahrzeugführers entlang einer berechneten Fahrtroute von einem Start- oder aktuellen Standort zu einem Zwischenzielort mit einem Navigationsrechner,
dadurch gekennzeichnet,
daß dieses über einen zweiten Speicher (65) für Abfahrtszeiten und Fahrtziele alternativer Verkehrsmittel von Zwischenzielorten verfügt,
und daß der Navigationsrechner derart ausgebildet ist, daß dieser unter Zuhilfenahme der Abfahrtszeiten und Fahrtziele Informationen zur Information des Fahrzeugführers und/oder zur Beeinflussung der Routenberechnung erzeugt.

10. Navigationsgerät nach Anspruch 9, dadurch gekennzeichnet, daß der zweite Speicher (65) mit einem Funkempfänger oder Funkgerät (70) zum Empfang der oder aktualisierter Abfahrtszeiten und Fahrtziele verbunden ist.
